# DEMANDE DE BREVET EUROPEEN

(11) **EP 1 884 675 A1**
(43) Date de publication de la demande: **06.02.2008**
(21) Numéro de dépôt: 07290914.6
(22) Date de dépôt: 20.07.2007
(51) Int. Cl.: F16D 23/12

(54) **Rondelle d'autocentrage pour butée d'embrayage de géométrie limitant la plastification des ondes**

(30) Priorité: 24.07.2006 FR 0606769
(71) Demandeur: SNR ROULEMENTS, 74000 Annecy (FR)
(72) Inventeur: Berthier, Julien, 74410 Saint Jorioz (FR); Bouvard, Sébastien, 74000 Annecy (FR); Morin, Emmanuel, 74600 Montagny les Lanches (FR)
(74) Mandataire: Sayettat, Julien Christian

(57) **Abrégé**

L'invention concerne une rondelle d'autocentrage (3) pour butée d'embrayage de véhicule automobile, ladite rondelle comprenant une couronne annulaire (6) présentant une pluralité d'ondes axiales (7) et une pluralité de dents (8) qui s'étendent depuis le bord intérieur de ladite couronne, ladite rondelle étant réalisée dans un matériau présentant une limite élastique au moins égale à 1000 MPa à 20°C, dans laquelle le rapport entre la dimension axiale Ho des ondes (7) et l'épaisseur e de la couronne (6) rempli la condition géométrique suivante : 2,4 < Ho/e ≤ 5. L'invention concerne également un montage d'une butée d'embrayage sur un arbre d'une boîte de vitesses d'un véhicule automobile par l'intermédiaire d'une telle rondelle.

## Description

L'invention concerne une rondelle d'autocentrage pour butée d'embrayage de véhicule automobile, ainsi qu'un montage d'une butée d'embrayage sur un arbre d'une boîte de vitesses d'un véhicule automobile par l'intermédiaire d'une telle rondelle.

Dans les applications embrayage, le diaphragme monté sur l'ensemble côté moteur et l'arbre primaire de la boîte de vitesses ne sont pas parfaitement concentriques.

Pour assurer la fonction d'autocentrage du diaphragme sur l'arbre, il est connu d'utiliser une rondelle dite d'autocentrage qui génère un effort d'autocentrage entre ledit arbre et la butée.

Pour ce faire, la butée est montée sur l'arbre par l'intermédiaire d'une telle rondelle de sorte à permettre des débattements élastiques axiaux et radiaux de la butée relativement à l'arbre.

Selon une réalisation connue, la rondelle comprend une couronne annulaire présentant une pluralité d'ondes axiales et une pluralité de dents qui s'étendent depuis le bord intérieur de ladite couronne. Ainsi, en prévoyant que la rondelle soit réalisée dans un matériau présentant une limite élastique au moins égale à 1000 MPa à 20°C, la rondelle permet de générer l'effort d'autocentrage requis.

Pour le montage d'une telle rondelle, il est nécessaire de la pousser sur l'arbre au moyen d'un poinçon, ce qui peut induire des déformations de celle-ci notamment au niveau des ondes. Ces déformations peuvent provoquer une plastification des ondes, ce qui est préjudiciable à la fiabilité dans le temps de la rondelle pour sa fonction d'autocentrage.

L'invention a pour but de résoudre les problèmes de l'art antérieur en proposant notamment une rondelle d'autocentrage dont les caractéristiques géométriques sont optimisées de sorte à éviter la plastification des ondes.

A cet effet, et selon un premier aspect, l'invention propose une rondelle d'autocentrage pour butée d'embrayage de véhicule automobile, ladite rondelle comprenant une couronne annulaire présentant une pluralité d'ondes axiales et une pluralité de dents qui s'étendent depuis le bord intérieur de ladite couronne, ladite rondelle étant réalisée dans un matériau présentant une limite élastique au moins égale à 1000 MPa à 20°C, dans laquelle le rapport entre la dimension axiale Ho des ondes et l'épaisseur e de la couronne rempli la condition géométrique suivante : 2,4 < Ho*l*e ≤ 5.

Selon un deuxième aspect, l'invention propose un montage d'une butée d'embrayage sur un arbre d'une boîte de vitesses d'un véhicule automobile, dans lequel ladite butée est montée sur l'arbre par l'intermédiaire d'une telle rondelle d'autocentrage.

D'autres objets et avantages de l'invention apparaîtront dans la description qui suit faite en référence aux figures annexées, dans lesquelles :
- la figure 1 est une vue partielle en coupe d'un montage d'une butée d'embrayage selon un mode de réalisation de l'invention ;
- la figure 2 est une vue de côté de la rondelle d'autocentrage utilisée dans le montage selon la figure 1 ;
- la figure 3 est une vue partielle de dessus de la rondelle d'autocentrage selon la figure 2 ;
- la figure 4 est une vue partielle en coupe de la rondelle d'autocentrage selon la figure 3 au niveau d'une dent.

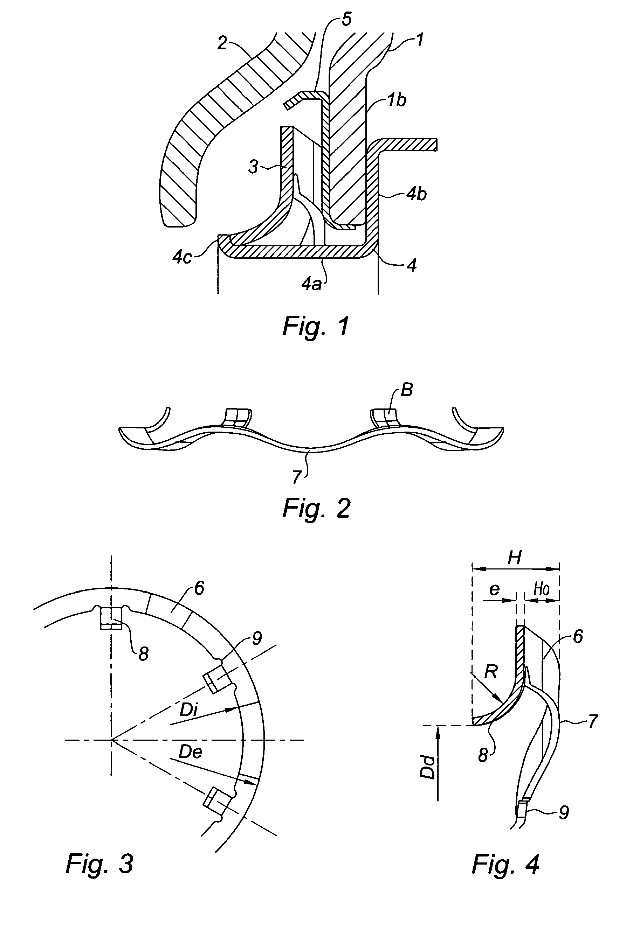

La figure 1 représente un montage d'une butée d'embrayage sur un arbre d'une boîte de vitesses de véhicule automobile, ladite butée comprenant une bague intérieure 1 et une bague extérieure 2 réalisées en tôle emboutie qui sont montrées partiellement sur la figure 1.

De façon connue, la butée comprend des corps roulants, typiquement des billes (non représentées), qui sont disposés entre les bagues 1, 2 de sorte à permettre leur rotation relative.

Dans le mode de réalisation représenté, la bague intérieure 1 est solidarisée à l'arbre de la boîte de vitesses pour être fixe et la bague extérieure 2 est destinée à être actionnée par le diaphragme en rotation par rapport audit arbre. Toutefois, le montage selon l'invention n'est pas limité à une telle réalisation, en particulier un montage prévoyant une bague extérieure solidaire de l'arbre et une bague intérieure entraînée en rotation est également envisageable.

Pour compenser les défauts de concentricité entre le diaphragme et l'arbre, le montage comprend en outre une rondelle d'autocentrage 3 par l'intermédiaire de laquelle la butée est montée sur l'arbre.

Selon le mode de réalisation représenté, le montage comprend un support annulaire 4 comprenant une portée axiale 4a de montage sur l'arbre et une portée radiale 4b en appui sur une portée correspondante 1b de la bague intérieure 1 de la butée. En outre, un déflecteur 5 est associé sur la portée 1b de la bague intérieure 1 et à l'opposé de la portée radiale 4b du support 4.

Comme représenté sur les figures 2 à 4, la rondelle 3 comprend une couronne annulaire 6 présentant une pluralité d'ondes axiales 7 et une pluralité de dents 8 qui s'étendent depuis le bord intérieur de ladite couronne. Pour assurer la fonction d'autocentrage, la rondelle 3 est réalisée dans un matériau présentant une limite élastique au moins égale à 1000 MPa à 20°C. Dans un exemple de réalisation, la rondelle 3 est réalisée en acier de type XC75 trempé ou encore en Inox.

Comme représenté sur la figure 1, la rondelle d'autocentrage 3 est disposée de sorte que les ondes 7 soient en appui sur la portée 1b de la bague intérieure 1 à l'opposé de la portée radiale 4b du support 4, les dents 8 étant en appui sur la portée axiale 4a dudit support. Plus précisément, les ondes 7 sont en appui sur le déflecteur 5. En outre, la portée axiale 4a comprend un repli annulaire externe 4c qui s'étend sensiblement radialement, les dents 8 étant en appui sur ledit repli de sorte à former butée axiale pour la rondelle 3.

Pour assurer une fiabilité optimale de la fonction d'autocentrage, notamment en évitant la plastification des ondes 7, l'invention prévoit que le rapport entre la dimension axiale Ho des ondes 7 et l'épaisseur e de la couronne 6 remplisse la condition géométrique suivante : 2,4 < Ho/e ≤ 5. Plus particulièrement, il est souhaitable que le rapport Ho/e soit supérieur ou égal à 3,5.

L'optimisation de la géométrie de la rondelle 3 en vue de sa fiabilité est également favorisée lorsque le nombre d'ondes N est tel que le rapport entre la somme des diamètres intérieur Di et extérieur De de la couronne 6 exprimés en millimètre et ledit nombre d'ondes est compris entre 10,5 et 15 inclus. En particulier, le nombre d'ondes 7 peut être égal à 6.

Selon une troisième condition géométrique, le rapport entre la différence (De - Di) et l'épaisseur e est compris entre 10 et 16 inclus.

La rondelle 3 selon l'invention peut également remplir la quatrième condition géométrique suivante : 4 ≤ (H-Ho)/e ≤ 8, H étant la dimension axiale de la rondelle 3.

En outre, la rondelle d'autocentrage 3 peut présenter seule ou en combinaison l'une des caractéristiques géométriques suivantes :
• 2 ≤ R/e ≤ 6, R étant le rayon de courbure de la zone de jonction entre les dents 8 et la couronne 6. En particulier le rapport R/e est au moins égal à 4;
• le rayon de courbure R est supérieur ou égal à 1 mm ;
• 1 ≤ (Di-Dd)/R ≤ 4, Dd étant le diamètre sous les dents 8.

Ces caractéristiques permettent notamment de limiter la plastification des dents 8 lors de la disposition de la rondelle d'autocentrage 3 sur le support annulaire 4, en particulier en limitant les contraintes de déformation des dents 8 lors de leur passage sur le repli 4c. En outre, la géométrie des dents 8 permet d'optimiser la fiabilité des efforts d'autocentrage qui doivent être appliqués.

Par ailleurs et comme représenté sur les figures, une découpe radiale 9 est prévue dans la couronne 6 respectivement de part et d'autre de la zone de jonction entre les dents 8 et la couronne 6. Plus précisément, les découpes 9 ont une forme sensiblement cylindrique.

A titre d'exemple, on donne ci-dessous les caractéristiques géométriques principales de la rondelle d'autocentrage 3 représentée sur les figures:
H = 4,4 mm
Ho = 1,8 mm
e = 0,4 mm
N=6
De = 38 mm
Di = 32,7 mm
Dd = 28 mm
R=2mm

## Revendications

1. Rondelle d'autocentrage (3) pour butée d'embrayage de véhicule automobile, ladite rondelle comprenant une couronne annulaire (6) présentant une pluralité d'ondes axiales (7) et une pluralité de dents (8) qui s'étendent depuis le bord intérieur de ladite couronne, ladite rondelle étant réalisée dans un matériau présentant une limite élastique au moins égale à 1000 MPa à 20°C, ladite rondelle étant **caractérisée en ce que** le rapport entre la dimension axiale Ho des ondes (7) et l'épaisseur e de la couronne (6) rempli la condition géométrique suivante : 2,4 < Hole ≤ 5.

2. Rondelle d'autocentrage selon la revendication 1, **caractérisée en ce que** le rapport Ho/e est supérieur ou égal à 3,5.

3. Rondelle d'autocentrage selon la revendication 1 ou 2, **caractérisée en ce qu'**elle est réalisée en acier de type XC75 trempé.

4. Rondelle d'autocentrage selon l'une quelconque des revendications 1 à 3, **caractérisée en ce que** le nombre d'ondes N est tel que le rapport entre la somme des diamètres intérieur Di et extérieur De de la couronne (6) exprimés en millimètre et ledit nombre d'ondes est compris entre 10,5 et 15 inclus.

5. Rondelle d'autocentrage selon la revendication 4, **caractérisée en ce que** le nombre d'ondes est égal à 6.

6. Rondelle d'autocentrage selon l'une quelconque des revendications 1 à 5, **caractérisée en ce que** le rapport entre la différence (De - Di) et l'épaisseur e est compris entre 10 et 16 inclus.

7. Rondelle d'autocentrage selon l'une quelconque des revendications 1 à 6, **caractérisée en ce qu'**elle remplie la condition géométrique suivante: 4 ≤ (H-Ho)/e ≤ 8, H étant la dimension axiale de la rondelle (3).

8. Rondelle d'autocentrage selon l'une quelconque des revendications 1 à 7, **caractérisée en ce qu'**une découpe radiale (9) est prévue dans la couronne (6) respectivement de part et d'autre de la zone de jonction entre les dents (8) et la couronne (6).

9. Rondelle d'autocentrage selon l'une quelconque des revendications 1 à 8, **caractérisée en ce qu'**elle présente seule ou en combinaison l'une des caractéristiques géométriques suivantes :
• 2 ≤ R/e ≤ 6, R étant le rayon de courbure de la zone de jonction entre les dents (8) et la couronne (6) ;
• le rayon de courbure R est supérieur ou égal à 1 mm;
• 1 ≤ (Di-Dd)/R ≤ 4, Dd étant le diamètre sous les dents (8).

10. Montage d'une butée d'embrayage sur un arbre d'une boîte de vitesses d'un véhicule automobile, dans lequel ladite butée est montée sur l'arbre par l'intermédiaire d'une rondelle d'autocentrage (3) selon l'une quelconque des revendications précédentes.

11. Montage selon la revendication 10, intégrant en outre un support annulaire (4) comprenant une portée axiale de montage (4a) sur l'arbre et une portée radiale (4b) en appui sur une portée correspondante (1 b) d'une bague (1) de la butée, dans lequel la rondelle d'autocentrage (3) est disposée de sorte que les ondes (7) soient en appui sur ladite portée de la bague (1) et à l'opposé de la portée radiale (4b) du support (4), les dents (8) étant en appui sur la portée axiale (4a) dudit support.

12. Montage selon la revendication 11, dans lequel la portée radiale (4a) comprend un repli annulaire externe (4c) qui s'étend sensiblement radialement, les dents (8) étant en appui sur ledit appui de sorte à former butée axiale pour la rondelle (3).
